# EUROPÄISCHE PATENTANMELDUNG

(11) **EP 3 185 219 A1**
(43) Veröffentlichungstag der Anmeldung: **28.06.2017**
(21) Anmeldenummer: 16154169.3
(22) Anmeldetag: 04.02.2016
(51) Int. Cl.: G07C 9/00, B60R 25/25

(54) **VERFAHREN ZUM ZUGREIFEN AUF WENIGSTENS EINE FAHRZEUGFUNKTIONALITÄT WENIGSTENS EINES KRAFTFAHRZEUGS, KRAFTFAHRZEUGZUGRIFFSVORRICHTUNG UND KRAFTFAHRZEUG**

(30) Priorität: 21.12.2015 DE 102015226356
(71) Anmelder: Volkswagen Aktiengesellschaft, 38440 Wolfsburg (DE)
(72) Erfinder: Verkin, Julian, 16761 Hennigsdorf (DE); Sammer, Patrick, 13156 Berlin (DE); Beyer, Karsten, 13189 Berlin (DE)

(57) **Zusammenfassung**

Ausführungsbeispiele beziehen sich auf ein Verfahren (100) zum Zugreifen auf wenigstens eine Fahrzeugfunktionalität wenigstens eines Kraftfahrzeugs. Das Verfahren (100) umfasst ein Vergleichen (140) von einen Benutzer des Kraftfahrzeugs eindeutig charakterisierenden biometrischen Benutzerdaten mit vorab hinterlegten Benutzerdaten. Das Verfahren (100) umfasst zudem ein Übertragen (160) eines Auslösesignals zum Betätigen der Fahrzeugfunktionalität, basierend auf einem Vergleichsergebnis der erfassten Benutzerdaten mit den vorab hinterlegten Benutzerdaten.

## Beschreibung

Die vorliegende Erfindung liegt auf dem Gebiet der Verfahren zum Zugreifen auf wenigstens eine Fahrzeugfunktionalität wenigstens eines Kraftfahrzeugs.

Viele Fahrer wechseln bereits heute regelmäßig zwischen verschiedenen Privat-, Firmen-, Carsharing- und Mietfahrzeugen, um eine möglichst gut an eine aktuelle Situation angepasste Mobilität zu erhalten. Dabei können diese Fahrzeuge häufig von unterschiedlichen Personen, wie Familienmitgliedern, Kollegen oder völlig Fremden, genutzt werden. Insbesondere für Mietfahrzeuge und gemeinsam genutzte Firmenfahrzeuge kann dabei die Nutzung mit Verwaltungsaufwand verbunden sein. Beispielsweise kann ein Fahrzeugschlüssel vor der Fahrt bei einer zentralen Stelle abgeholt und nach der Nutzung wieder dorthin zurück gebracht werden. Zudem kann das Führen eines Fahrtenbuchs erforderlich sein. Schlüsselgebundene Komfortfunktionen können so gegebenenfalls nicht nutzbar sein. So kann es beispielsweise sein, dass der Fahrzeugnutzer nicht auf die automatische Einstellung seiner persönlichen Sitzkonfiguration zurückgreifen kann. Aber auch in Familien mit mehreren Fahrzeugen kann das Wechseln der Fahrzeuge untereinander mit einer Schlüsselweitergabe verbunden sein. Dabei kann es insbesondere bei Fahrzeugen des gleichen Herstellers aufgrund der Ähnlichkeit der Schlüssel leicht zu Verwechslungen kommen (zum Beispiel bei verschiedenen Schlüssel desselben Herstellers, die in einem Privathaushalt in der Schlüsselschale liegen). Dies kann dazu führen, dass beispielsweise bei Paaren mit zwei gemeinsamen Fahrzeugen der Einfachheit halber jeder Partner beide Schlüssel mit sich führt. Dies kann jedoch den Schlüsselbund unnötig vergrößern, und zudem das Risiko des Verlusts eines Schlüssels erhöhen.

Bei Carsharing-Flotten kann der Zugang zum Fahrzeug über ein separates System geregelt werden, bei dem eine persönliche ID (zum Beispiel Chipkarte oder Smartphone) zum Einsatz kommen kann. Der Fahrzeugschlüssel kann sich dann im Fahrzeug befinden, oder das Starten des Fahrzeugs über die persönliche ID stattfinden.

Der Fahrer kann dabei dazu gezwungen sein, je nach Situation mehrere verschiedene Schlüssel bzw. IDs mit sich zu führen (zum Beispiel Schlüssel für Privatfahrzeug, mehrere Carsharing-Chipkarten, Schlüssel für Firmenfahrzeug). Konventionelle Systeme, bei denen flexibel konfiguriert werden kann, welche Person Zugang zu welchen Türen bzw. Schlössern erhält, können aktuell lediglich für Gebäudezugänge genutzt werden. Der Verlust oder Diebstahl der ID kann Fremden womöglich uneingeschränkten Zugang gestatten, bis das System neu programmiert ist, und der verlorene Schlüssel bzw. die ID ausgetragen wurde. Auch bei weiteren Anwendungen über den Bereich der Kraftfahrzeuge hinaus können derartige Probleme möglicherweise auftreten.

Mithin ist es wünschenswert, ein Konzept für einen Zugriff auf eine Fahrzeugfunktionalität eines Kraftfahrzeugs zu verbessern.

Diesem Bedarf tragen ein Verfahren zum Zugreifen auf wenigstens eine Fahrzeugfunktionalität wenigstens eines Kraftfahrzeugs, eine Kraftfahrzeugzugriffsvorrichtung und ein Kraftfahrzeug mit den Merkmalen der unabhängigen Patentansprüche Rechnung. Weitere vorteilhafte Ausführungsformen und Weiterbildungen sind Gegenstand der abhängigen Patentansprüche.

Gemäß einem ersten Aspekt der vorliegenden Erfindung beziehen sich Ausführungsbeispiele auf ein Verfahren zum Zugreifen auf wenigstens eine Fahrzeugfunktionalität wenigstens eines Kraftfahrzeugs. Das Verfahren umfasst ein Vergleichen von einen Benutzer des Kraftfahrzeugs eindeutig charakterisierenden biometrischen Benutzerdaten mit vorab hinterlegten Benutzerdaten. Das Verfahren umfasst außerdem ein Übertragen eines Auslösesignals zum Betätigen der Fahrzeugfunktionalität, basierend auf einem Vergleichsergebnis der erfassten Benutzerdaten mit den vorab hinterlegten Benutzerdaten. Somit können Möglichkeiten geschaffen werden, um beispielsweise das Auslösesignal lediglich dann zu übertragen, wenn der Benutzer authentifiziert wurde, oder alternativ das Auslösesignal, welches Authentifizierungsinformationen umfasst, zu übertragen. Dies kann eine eindeutige Identifizierung des Benutzers erlauben, und gegebenenfalls einem weiteren, unbefugten Benutzer einen Zugriff auf Fahrzeugfunktionalitäten verweigern, oder lediglich eingeschränkte Nutzungsrechte zu geben. Die Kraftfahrzeugzugriffsvorrichtung, oder anders ausgedrückt, ein Schlüssel, kann so vor Missbrauch geschützt werden.

Es sei darauf hingewiesen, dass das vorliegende Konzept auch in weiteren technischen Gebieten Anwendung finden kann und nicht lediglich auf die Anwendung bei Fahrzeugen beschränkt ist. Es kann sich also auch allgemein um ein Verfahren zum Zugreifen auf eine andere Funktionalität als eine Fahrzeugfunktionalität handeln, wie beispielsweise auf eine technische Funktionalität eines Raums, Gebäudes oder dergleichen (Smart Home). Allgemein umfasst das Verfahren also ein Vergleichen von einen Nutzer der Funktionalität eindeutig charakterisierenden biometrischen Benutzerdaten mit vorab hinterlegten Benutzerdaten. Das Verfahren umfasst außerdem ein Übertragen eines Auslösesignals zum Betätigen der Funktionalität, basierend auf einem Vergleichsergebnis der erfassten Benutzerdaten mit den vorab hinterlegten Benutzerdaten. Die vorliegende Offenbarung ist also nicht lediglich auf Kraftfahrzeuge und Fahrzeugfunktionalitäten beschränkt. Hierin lediglich anhand von Kraftfahrzeugen und Fahrzeugfunktionalitäten beschriebene Prinzipien lassen sich stattdessen auch auf andere Bereiche, wie zum Beispiel Gebäude, Räume und Funktionalitäten von technischen Verfahren und Systemen für "intelligente" Gebäude oder Räume übertragen.

Bei manchen Ausführungsbeispielen erfolgt das Übertragen des Auslösesignals zum Betätigen der Funktionalität, insbesondere einer Fahrzeugfunktionalität, falls die erfassten Benutzerdaten mit den vorab hinterlegten Benutzerdaten übereinstimmen. Somit kann einem nicht korrekt authentifizierten Benutzer der Zugriff auf bestimmte oder sogar alle Fahrzeugfunktionalitäten des Kraftfahrzeugs verweigert werden.

Bei einigen Ausführungsbeispielen umfasst das Verfahren ferner ein Auswählen des Auslösesignals aus einer Mehrzahl von Auslösesignalen für eine Mehrzahl von Entitäten, wie zum Beispiel Kraftfahrzeugen und/oder Gebäuden. Dadurch kann es ermöglicht werden, mehrere Entitäten, wie zum Beispiel Kraftfahrzeuge und/oder Gebäude (Räume), mit einem gemeinsamen Schlüssel zu bedienen, wodurch dem Benutzer gegebenenfalls die Handhabung mehrerer Schlüssel vereinfacht oder erspart werden kann.

Bei manchen Ausführungsbeispielen umfasst das Verfahren ferner ein Empfangen eines Anfragesignals von dem Kraftfahrzeug und/oder einer anderen Entität (Gebäude, Raum, etc.). Dabei erfolgt das Auswählen des Auslösesignals basierend auf dem Anfragesignal. Somit kann eine Auswahl des Auslösesignals für ein bestimmtes Fahrzeug und/oder eine andere Entität durch den Benutzer entfallen, und eine Bedienung erleichtert werden.

Bei einigen Ausführungsbeispielen umfasst das Verfahren ferner ein Erfassen der biometrischen Benutzerdaten. Eine Fälschungssicherheit von Zugangsdaten oder eine Sicherheit einer Benutzerauthentisierung kann somit erheblich erhöht werden.

Bei manchen Ausführungsbeispielen umfasst das Verfahren ferner ein einmaliges, kontinuierliches oder periodisches Erfassen der biometrischen Benutzerdaten. Dies kann zum Beispiel ein Erfassen zeitlicher Verläufe biometrischer Messwerte erlauben, wie beispielsweise eines Herzschlags oder einer Gangart des Benutzers. Ferner kann dadurch eine Registrierung eines Benutzerwechsels oder Verlustes erleichtert werden.

Bei einigen Ausführungsbeispielen umfasst das Verfahren ferner ein Empfangen der vorab hinterlegten Benutzerdaten von dem Kraftfahrzeug und/oder einer anderen Entität. Somit kann eine Hinterlegung der Benutzerdaten beispielsweise nicht nur bei der Kraftfahrzeugzugriffsvorrichtung, sondern auch bei dem Fahrzeug selbst erfolgen.

Bei manchen Ausführungsbeispielen umfasst das Übertragen des Auslösesignals ferner ein Übermitteln von dem Benutzer individuell zugeordneten Zugriffsdaten zum Betätigen der Fahrzeugfunktionalität. Dadurch kann es möglich sein, benutzerspezifische Einstellungen (zum Beispiel Spiegel- oder Sitzposition) in verschiedenen Fahrzeugen zu übernehmen, oder auch zwischen diesen zu übertragen.

Bei einigen Ausführungsbeispielen erfolgt das Übertragen des Auslösesignals mittels Nahfeldkommunikation. Möglicherweise nicht erwünschte Zugriffe auf das Fahrzeug und/oder eine andere Entität aus größerer Entfernung, beispielsweise über 50 m oder über eine Sichtweite hinaus, können somit gegebenenfalls unterbunden werden.

Bei manchen Ausführungsbeispielen erfolgt das Übertragen des Auslösesignals als aktives Senden. Dadurch kann beispielsweise ein Benutzer kontrollieren, ob oder zu welchem Zeitpunkt ein Auslösesignal gesendet werden soll.

Darüber hinaus schaffen weitere Ausführungsbeispiele auch ein Programm oder Computerprogramm mit einem Programmcode zum Durchführen eines der genannten Verfahren, wenn der Programmcode auf einem Computer, einem Prozessor oder einer programmierbaren Hardwarekomponente, wie zum Beispiel einer applikationsspezifischen integrierten Schaltung (ASIC), ausgeführt wird.

Gemäß einem weiteren Aspekt beziehen sich Ausführungsbeispiele auf eine Kraftfahrzeugzugriffsvorrichtung zum Zugreifen auf wenigstens eine Fahrzeugfunktionalität wenigstens eines Kraftfahrzeugs. Die Kraftfahrzeugzugriffsvorrichtung umfasst eine Auswerteeinrichtung, welche dazu ausgebildet ist, einen Benutzer des Kraftfahrzeugs eindeutig charakterisierende biometrische Benutzerdaten mit vorab hinterlegten Benutzerdaten zu vergleichen. Die Kraftfahrzeugzugriffsvorrichtung umfasst zudem eine Übertragungseinrichtung, welche dazu ausgebildet ist, ein Auslösesignal zum Betätigen der Fahrzeugfunktionalität zu übertragen, basierend auf einem Vergleichsergebnis der erfassten Benutzerdaten mit den vorab hinterlegten Benutzerdaten Eine eindeutige Identifizierung des Benutzers, und gegebenenfalls ein verbesserter Schutz vor Missbrauch kann so erfolgen.

Bei manchen Ausführungsbeispielen ist die Übertragungseinrichtung ferner dazu ausgebildet, das Auslösesignal zum Betätigen der Fahrzeugfunktionalität zu übertragen, falls die erfassten Benutzerdaten mit den vorab hinterlegten Benutzerdaten übereinstimmen.

Bei einigen Ausführungsbeispielen umfasst die Kraftfahrzeugzugriffsvorrichtung ferner einen Speicher, welcher dazu ausgebildet ist, die vorab hinterlegten Benutzerdaten zu speichern. Anders ausgedrückt können Benutzerdaten an die Kraftfahrzeugzugriffsvorrichtung angelernt werden. Ein Zugriff auf das Fahrzeug kann dadurch, beispielsweise bei Anlegen eines neuen Benutzerkontos, gegebenenfalls nicht erforderlich sein.

Bei manchen Ausführungsbeispielen umfasst die Kraftfahrzeugzugriffsvorrichtung ferner einen Sensor, welcher dazu ausgebildet ist, den Benutzer eindeutig charakterisierende biometrische Benutzerdaten kontinuierlich oder periodisch von dem Benutzer zu erfassen. Eine Fälschungssicherheit von Zugangsdaten kann somit erheblich erhöht werden.

Bei einigen Ausführungsbeispielen ist die Kraftfahrzeugzugriffsvorrichtung ferner dazu ausgebildet, am Körper, wie zum Beispiel an einem Handgelenk, des Benutzers getragen zu werden. Dies kann einen verbesserten Körperkontakt bewirken, der unter Umständen eine Erfassung biometrischer Benutzerdaten erleichtern kann.

Bei manchen Ausführungsbeispielen umfasst die Kraftfahrzeugzugriffsvorrichtung ferner einen Empfänger, welcher dazu ausgebildet ist, ein Anfragesignal von dem Kraftfahrzeug zu empfangen. Durch das Anfragesignal kann somit gegebenenfalls ohne weiteren Benutzereingriff das Senden des Auslösesignals initiiert werden. Eine Benutzereingabe zum Auslösen des Auslösesignals kann so möglicherweise entfallen, was den Benutzerkomfort erhöhen kann.

Bei einigen Ausführungsbeispielen ist die Auswerteeinrichtung dazu ausgebildet, das Auslösesignal aus einer Mehrzahl von Auslösesignalen für eine Mehrzahl von Kraftfahrzeugen auszuwählen. Somit kann ein Zugriff auf mehrere Fahrzeuge mit einem gemeinsamen Schlüssel möglich werden.

Bei manchen Ausführungsbeispielen ist die Auswerteeinrichtung ferner dazu ausgebildet, das Auslösesignal basierend auf dem Anfragesignal auszuwählen. Dadurch kann auch eine Benutzereingabe zum Auswählen des Auslösesignals möglicherweise entfallen, was den Benutzerkomfort weiter erhöhen kann.

Bei einigen Ausführungsbeispielen umfasst die Kraftfahrzeugzugriffsvorrichtung ferner einen Empfänger, welcher dazu ausgebildet ist, die vorab hinterlegten Benutzerdaten von dem Kraftfahrzeug zu empfangen. Benutzerdaten können dabei bei dem Kraftfahrzeug hinterlegt sein, was gegebenenfalls ein Löschen eines Benutzerkontos auch dann ermöglichen kann, wenn der Schlüssel nicht zur Hand ist.

Bei manchen Ausführungsbeispielen umfasst die Kraftfahrzeugzugriffsvorrichtung ferner einen Speicher, welcher dazu ausgebildet ist, dem Benutzer individuell zugeordnete Zugriffsdaten zum Betätigen der Fahrzeugfunktionalität des Kraftfahrzeugs und/oder einer weiteren Fahrzeugfunktionalität eines weiteren Kraftfahrzeugs zu speichern. Dadurch können möglicherweise benutzerspezifische Einstellungen in verschiedenen Fahrzeugen übernommen, oder auch auf diese übertragen werden.

Bei einigen Ausführungsbeispielen ist der Sender dazu ausgebildet, die Zugriffsdaten zu senden. Die Zugriffsdaten können beispielsweise von dem Auslösesignal umfasst sein, wodurch eine Kommunikation zwischen Schlüssel und Fahrzeug vereinfacht werden kann.

Gemäß noch einem weiteren Aspekt beziehen sich Ausführungsbeispiele auf ein Kraftfahrzeug mit wenigstens einer Fahrzeugfunktionalität. Das Kraftfahrzeug umfasst eine Kontrolleinrichtung mit einem Empfänger, welcher dazu ausgebildet ist, ein Auslösesignal für die Fahrzeugfunktionalität von einer fahrzeugexternen Kraftfahrzeugzugriffsvorrichtung zu empfangen. Dabei ist die Kontrolleinrichtung dazu ausgebildet, in Folge des Auslösesignals ein Steuersignal zum Betätigen der Fahrzeugfunktionalität bereitzustellen. Das Kraftfahrzeug umfasst zudem ein Steuergerät, welches dazu ausgebildet ist, die Fahrzeugfunktionalität in Reaktion auf das Steuersignal zu betätigen. Eine Absicherung des Fahrzeugs gegen unerwünschte Zugriffe kann dadurch erleichtert werden.

Bei manchen Ausführungsbeispielen umfasst das Kraftfahrzeug ferner einen Speicher, welcher dazu ausgebildet ist, vorab hinterlegte Benutzerdaten zum Vergleich mit einen Benutzer des Kraftfahrzeugs eindeutig charakterisierenden biometrischen Benutzerdaten zu speichern. Dadurch kann dem Fahrzeug Information zugänglich sein, welcher Benutzer zur Fahrzeugnutzung berechtigt ist, und diese Information gegebenenfalls auch nach Verlust eines Schlüssels geändert oder gelöscht werden.

Bei einigen Ausführungsbeispielen ist der Speicher dazu ausgebildet, dem Benutzer individuell zugeordnete Zugriffsdaten zum Betätigen der Fahrzeugfunktionalität zu speichern. Der Benutzer kann somit komfortabel auf individuelle Einstellungen zurückgreifen.

Bei manchen Ausführungsbeispielen ist das Steuergerät dazu ausgebildet, die Fahrzeugfunktionalität vermittels des Steuersignals und basierend auf den Zugriffsdaten zu betätigen. Eine Nutzung der Benutzerdaten in mehreren Fahrzeugen kann so vereinfacht werden.

Bei einigen Ausführungsbeispielen umfasst das Kraftfahrzeug ferner einen Sensor, welcher dazu ausgebildet ist, in Reaktion auf eine Berührung durch den Benutzer ein Sensorsignal bereitzustellen. Dabei umfasst die Kontrolleinrichtung einen Sender, welcher dazu ausgebildet ist, in Reaktion auf das Sensorsignal ein Anfragesignal an eine fahrzeugexterne Kraftfahrzeugzugriffsvorrichtung zu senden. Dies kann beispielsweise verhindern, dass mittels eines gemeinsamen Schlüssels mehrere Fahrzeuge gleichzeitig ein entsprechendes Auslösesignal erhalten, und dadurch beispielsweise entriegelt werden.

Gemäß noch einem weiteren Aspekt beziehen sich Ausführungsbeispiele auf ein Verfahren für ein System mit einer Kraftfahrzeugzugriffsvorrichtung und wenigstens einem Kraftfahrzeug. Das Verfahren umfasst ein Erfassen von einen Benutzer des Kraftfahrzeugs eindeutig charakterisierenden biometrischen Benutzerdaten. Das Verfahren umfasst zudem ein Authentisieren des Benutzers basierend auf einer Kombination der biometrischen Benutzerdaten und einer eindeutigen, dem Benutzer zugeordneten Benutzerkennung durch die Kraftfahrzeugzugriffsvorrichtung. Das Verfahren umfasst ferner ein Zugreifen des Benutzers basierend auf einer Kombination der biometrischen Benutzerdaten und einer eindeutigen, der Kraftfahrzeugzugriffsvorrichtung zugeordneten Schlüsselkennung auf wenigstens eine Fahrzeugfunktionalität des wenigstens einen Kraftfahrzeugs. Somit kann ein Missbrauch eines Schlüssels leichter vermieden werden, oder auch eine Unterscheidung des Systems zwischen mehreren verschiedenen Benutzern mit gegebenenfalls unterschiedlichen Rechten möglich werden.

Bei manchen Ausführungsbeispielen umfasst das Verfahren ferner ein Anlernen der Kombination der biometrischen Benutzerdaten und der dem Benutzer zugeordneten Benutzerkennung auf der Kraftfahrzeugzugriffsvorrichtung. Somit kann eine Speicherung mehrerer verschiedener Benutzer auf einem gemeinsamen Schlüssel ermöglicht werden.

Bei einigen Ausführungsbeispielen umfasst das Verfahren ferner ein Anlernen der Kombination der biometrischen Benutzerdaten und der der Kraftfahrzeugzugriffsvorrichtung zugeordneten Schlüsselkennung auf dem Kraftfahrzeug. Dadurch kann das Kraftfahrzeug zwischen mehreren möglichen Benutzern unterscheiden, und gegebenenfalls je nach Benutzer Zugriffe auf bestimmte Funktionalitäten zulassen, oder auch auf andere Funktionalitäten verweigern.

Nachfolgend werden unter Bezugnahme auf die beigefügten Figuren einige exemplarische Ausführungsbeispiele näher beschrieben und erläutert. Es zeigen im Einzelnen:
- Fig. 1: ein Ablaufdiagramm eines Verfahrens zum Zugreifen auf wenigstens eine Fahrzeugfunktionalität wenigstens eines Kraftfahrzeugs gemäß einem Ausführungsbeispiel;
- Fig. 2a: ein Blockdiagramm einer Kraftfahrzeugzugriffsvorrichtung gemäß einem Ausführungsbeispiel;
- Fig. 2b: ein Blockdiagramm eines Kraftfahrzeugs gemäß einem Ausführungsbeispiel;
- Fig. 3: ein Ablaufdiagramm eines Verfahrens für ein System mit einer Kraftfahrzeugzugriffsvorrichtung und wenigstens einem Kraftfahrzeug gemäß einem Ausführungsbeispiel; und
- Fig. 4: ein System mit einer Kraftfahrzeugzugriffsvorrichtung und wenigstens einem Kraftfahrzeug gemäß einem Ausführungsbeispiel.

Verschiedene Ausführungsbeispiele werden nun ausführlicher unter Bezugnahme auf die beiliegenden Zeichnungen beschrieben, in denen einige Ausführungsbeispiele dargestellt sind.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "gekoppelt" bezeichnet wird, mit dem anderen Element direkt verbunden oder gekoppelt sein kann oder dass dazwischenliegende Elemente vorhanden sein können. Wenn ein Element dagegen als "direkt verbunden" oder "direkt gekoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

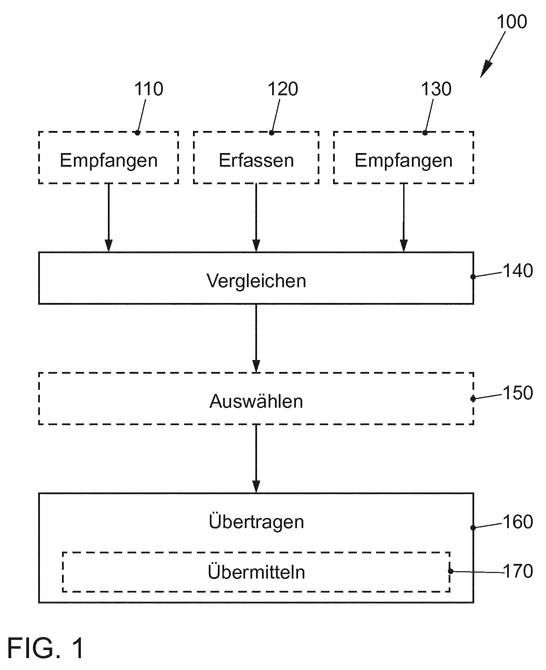

Fig. 1 zeigt ein Ablaufdiagramm für ein Ausführungsbeispiel eines Verfahrens 100 zum Zugreifen auf wenigstens eine Fahrzeugfunktionalität wenigstens eines Kraftfahrzeugs. Wie oben bereits erwähnt wurde, können an die Stelle der Fahrzeugfunktionalität auch andere Funktionalitäten treten, wie zum Beispiel Funktionalitäten technischer Verfahren und Systeme für haustechnisch vernetzte Gebäude oder Räume (Smart Home). Demzufolge kann an die Stelle eines Kraftfahrzeugs also auch eine andere Entität, die beispielsweise ein Gebäude, ein Raum oder dergleichen, treten. Zunächst werden Verfahrensschritte eines einfachen Ausführungsbeispiels erläutert, die als durchgezogene Boxen dargestellt sind. Optionale weitere Verfahrensschritte, von denen wahlweise alle, einige oder auch keiner zusätzlich zu den zuvor genannten erfolgen können, sind als gestrichelte Boxen dargestellt, und werden im weiteren Verlauf noch näher beschrieben.

Die Kraftfahrzeugzugriffsvorrichtung kann beispielsweise als elektronischer Schlüssel ausgeführt sein. Entsprechend werden im Nachfolgenden die Begriffe "Kraftfahrzeugzugriffsvorrichtung" und "Schlüssel" synonym zueinander verwendet. Das Verfahren 100 umfasst ein Vergleichen 140 von einen Benutzer des Kraftfahrzeugs eindeutig charakterisierenden biometrischen Benutzerdaten mit vorab hinterlegten Benutzerdaten. Biometrische Benutzerdaten können solche Daten sein, die auf körperliche Merkmale des Benutzers schließen lassen, und diesen dadurch eindeutig charakterisieren. Derartige Merkmale können einen Herzschlagrhythmus, ein Venenbild (zum Beispiel vom Handgelenk), ein spezifischer Widerstand der Haut, eine Gangart, Stimme, Iris oder ein Fingerabdruck des Benutzers sein, um lediglich einige Beispiele zu nennen, welche jedoch nicht als Einschränkung möglicher Ausgestaltungen zu verstehen sind. Die vorab hinterlegten Benutzerdaten können ebensolchen biometrischen Daten entsprechen. Die Hinterlegung kann dabei zum Beispiel im Rahmen eines Anlegens eines Benutzerprofils auf einem Speicher erfolgen, welcher von dem Kraftfahrzeug oder auch von dem Schlüssel umfasst sein kann. Das Verfahren 100 umfasst außerdem ein Übertragen 160 eines Auslösesignals zum Betätigen der Fahrzeugfunktionalität, basierend auf einem Vergleichsergebnis der erfassten Benutzerdaten mit den vorab hinterlegten Benutzerdaten. Signale können analog oder digital, kontinuierlich oder diskret, periodisch oder aperiodisch sein. Das Übertragen 160 kann ein aktives Senden durch den Schlüssel an das Fahrzeug, oder auch ein passives Senden umfassen. Bei einem aktiven Senden kann ein Benutzer beispielsweise kontrollieren, ob oder zu welchem Zeitpunkt das Auslösesignal gesendet werden soll. Dies kann zum Beispiel durch ein Betätigen eines Knopfes oder einer Taste geschehen. Bei einem passiven Senden kann beispielsweise eine induktive Kopplung durch eine entsprechende, von dem Fahrzeug umfasste Einrichtung erfolgen, und das Auslösesignal von dem Schlüssel auslesen. Hierfür kann beispielsweise eine Identifizierung mittels elektromagnetischer Wellen, insbesondere im Radiofrequenzbereich (engl.: radiofrequency identification, RFID) verwendet werden. Das Auslösesignal kann zum Beispiel eine eindeutige Fahrzeugkennung zum Zugreifen auf die Fahrzeugfunktionalität umfassen, beispielsweise eine dem Fahrzeug bekannte, eindeutige Zeichenabfolge. Es kann somit ermöglicht werden, dass das Fahrzeug auf weitere, davon abweichende Kennungen oder Zeichenabfolgen nicht reagiert. Ferner kann das Auslösesignal bei einem Fahrzeug ein Ansteuern der Fahrzeugfunktionalität durch eine Kontrolleinrichtung des Fahrzeugs verursachen. Bei einem Ausführungsbeispiel werden das Vergleichen 140 und Übertragen 160 durch die Kraftfahrzeugzugriffsvorrichtung, bzw. den Schlüssel vorgenommen. Wie durch ein späteres Ausführungsbeispiel noch verdeutlicht wird, können das Vergleichen 140 und Übertragen 160 jedoch auch fahrzeugintern stattfinden. Dabei kann das Vergleichen 140 der erfassten biometrischen Benutzerdaten mit den vorab hinterlegten Benutzerdaten zum Beispiel durch eine Kontrolleinrichtung des Fahrzeugs erfolgen. Das Übertragen 160 des Auslösesignals kann weiterhin innerhalb der Kontrolleinrichtung des Fahrzeugs erfolgen, oder anders ausgedrückt einem Übergeben eines Zwischenergebnisses von einem auf der Kontrolleinrichtung ausgeführten Computerprogramm an ein weiteres Computerprogramm entsprechen. So kann etwa ein Ausgabewert eines Vergleichsalgorithmus zu Durchführen des Vergleichens 140 von dem Auslösesignal umfasst sein, und als Eingabewert für einen Erzeugeralgorithmus zum Erzeugen des Steuersignals dienen, durch welches die Fahrzeugfunktionalität betätigt werden kann.

Bei manchen Ausführungsbeispielen erfolgt das Übertragen 160 des Auslösesignals zum Betätigen der Fahrzeugfunktionalität, falls die erfassten Benutzerdaten mit den vorab hinterlegten Benutzerdaten übereinstimmen. Somit kann einem nicht korrekt authentifizierten Benutzer der Zugriff auf bestimmte oder sogar alle Fahrzeugfunktionalitäten des Kraftfahrzeugs verweigert werden.

Bei einigen Ausführungsbeispielen umfasst das Verfahren 100 ferner ein Auswählen 150 des Auslösesignals aus einer Mehrzahl von Auslösesignalen für eine Mehrzahl von Kraftfahrzeugen. Die Mehrzahl von Auslösesignalen kann beispielsweise seitens des Schlüssels abgespeichert werden. Somit kann der Schlüssel zur Bedienung einer Mehrzahl von Kraftfahrzeugen verwendbar sein. Anders ausgedrückt kann eines aus einer Mehrzahl von Kraftfahrzeugen, und, beispielsweise zu einem anderen Zeitpunkt, ein weiteres aus der Mehrzahl von Kraftfahrzeugen durch den Schlüssel bedient werden. Das Auswählen 150 kann durch eine aktive Benutzereingabe erfolgen, oder auch in Reaktion auf ein zuvor empfangenes Anfragesignal eines bestimmten Kraftfahrzeuges.

Bei manchen Ausführungsbeispielen umfasst das Verfahren 100 ferner ein Empfangen 110 eines Anfragesignals, welches von dem Kraftfahrzeug gesendet wurde. Dabei erfolgt das Auswählen 150 des Auslösesignals basierend auf dem Anfragesignal von dem Kraftfahrzeug. Das Anfragesignal und das auszuwählende Auslösesignal können zum Beispiel eine gemeinsame Zuordnungsinformation aufweisen, sodass die Auswahl des Auslösesignals durch die Zuordnungsinformation vorgegeben wird. Somit kann eine Auswahl des Auslösesignals für ein bestimmtes Fahrzeug durch den Benutzer entfallen.

Bei einigen Ausführungsbeispielen umfasst das Verfahren 100 ferner ein Erfassen 120 der biometrischen Benutzerdaten durch den Schlüssel. Das Erfassen 120 kann beispielsweise ein Scannen einer Iris oder eines Fingerabdrucks, ein akustisches Empfangen einer Stimmcharakteristik, ein Messen einer Beschleunigung oder einer Herzschlagfrequenz eines Benutzers sein. Entsprechend können hierfür optische, akustische oder Beschleunigungssensoren zum Einsatz kommen, um nur einige Beispiele zu nennen.

Bei manchen Ausführungsbeispielen umfasst das Verfahren 100 ferner ein kontinuierliches oder periodisches Erfassen 120 der biometrischen Benutzerdaten. Dies kann zum Beispiel ein Erfassen zeitlicher Verläufe biometrischer Messwerte erlauben, wie beispielsweise eines Herzschlags oder einer Gangart des Benutzers. Ein kontinuierliches Erfassen kann sich hierbei zum Beispiel über Zeiträume in einem Bereich von mindestens einer Sekunde, vorzugsweise mindestens 5 oder 10 Sekunden, erstrecken. Ein periodisches Erfassen kann zum Beispiel Messungen in Abständen von Zehntelsekunden, Sekunden, Minuten oder mehr umfassen. Dadurch kann zum Beispiel festgestellt werden, ob der Schlüssel zwischenzeitlich an einen anderen, möglicherweise unbefugten Benutzer übergeben wurde. Anders können die biometrischen Benutzerdaten einmalig oder zu einem bestimmten Zeitpunkt erfasst werden. Ein Zeitpunkt kann hierbei zum Beispiel als Zeitraum kleiner als eine Sekunde verstanden werden. Erfasste Benutzerdaten können bei manchen Ausführungsbeispielen lediglich für einen eingeschränkten Zeitraum für das Vergleichen 140 mit den vorab hinterlegten Daten bereitstehen, beispielsweise bis zu 10 Sekunden oder einer Minute.

Bei einigen Ausführungsbeispielen umfasst das Verfahren 100 ferner ein Empfangen 130 der vorab hinterlegten Benutzerdaten. Mit anderen Worten empfängt der Schlüssel die von dem Kraftfahrzeug gesendeten, vorab hinterlegten Benutzerdaten. Somit kann eine Hinterlegung der Benutzerdaten nicht nur auf einem Speicher des Schlüssels, sondern auch auf einem Speicher des Fahrzeugs selbst erfolgen.

Bei manchen Ausführungsbeispielen umfasst das Senden oder Übertragen 160 des Auslösesignals von dem Schlüssel an das Fahrzeug ferner ein Übermitteln 170 von dem Benutzer individuell zugeordneten Zugriffsdaten zum Betätigen der Fahrzeugfunktionalität. Dadurch kann es möglich sein, benutzerspezifische Einstellungen (zum Beispiel Spiegel- oder Sitzposition) in verschiedenen Fahrzeugen zu übernehmen, oder auch zwischen diesen zu übertragen. Eine Kontrolleinrichtung kann diese Zugriffsdaten weiter nutzen, um die Fahrzeugfunktionalität basierend auf diesen Zugriffsdaten anzusteuern.

Bei einigen Ausführungsbeispielen erfolgt das Übertragen 160 des Auslösesignals mittels Nahfeldkommunikation. Möglicherweise nicht erwünschte Zugriffe auf das Fahrzeug aus größerer Entfernung, beispielsweise über 50 m oder über eine Sichtweite hinaus, können somit gegebenenfalls unterbunden werden. Bei einem passiven Senden des Auslösesignals kann beispielsweise auch eine Annäherung auf eine Entfernung von höchstens 1 m erforderlich sein. Dies kann, sofern mehrere Auslösesignale auf dem Schlüssel abgespeichert sind, ferner bewirken, dass lediglich eine Fahrzeugfunktionalität, zum Beispiel Türverriegelung, eines solchen Kraftfahrzeugs betätigt wird, dessen Benutzung von dem Benutzer beabsichtigt ist. Ein Entriegeln mehrerer durch den Schlüssel benutzbarer Fahrzeuge, und ein unbeabsichtigtes Zurücklassen eines aufgesperrten Fahrzeugs kann so gegebenenfalls vermieden werden.

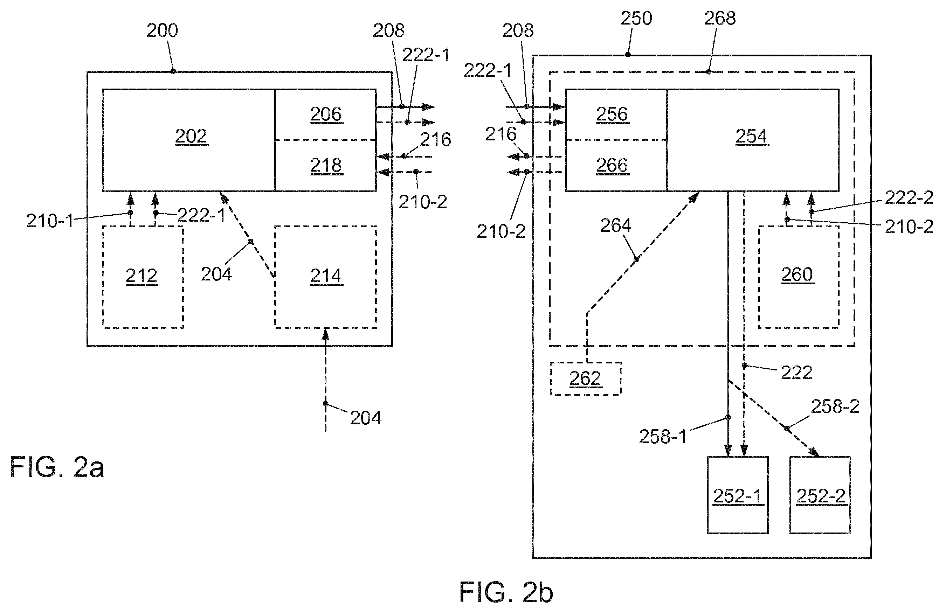

Fig. 2a zeigt ein Blockdiagramm eines Ausführungsbeispiels einer Kraftfahrzeugzugriffsvorrichtung 200 oder eines Schlüssels 200 zum Zugreifen auf wenigstens eine Fahrzeugfunktionalität wenigstens eines Kraftfahrzeugs. Schlüssel 200 ist beispielsweise als tragbare Vorrichtung, oder mit anderen Worten als Vorrichtung ausgebildet, welche aufgrund ihrer Größe und ihres Gewichts ohne größere körperliche Anstrengung tragbar ist. Schlüssel 200 umfasst eine Auswerteeinrichtung 202, welche dazu ausgebildet ist, einen Benutzer des Kraftfahrzeugs eindeutig charakterisierende biometrische Benutzerdaten 204 mit vorab hinterlegten Benutzerdaten 210 zu vergleichen. Auswerteeinrichtung 202 kann zum Beispiel einen Prozessor oder Mikrocontroller umfassen. Bei einem einfachen Ausführungsbeispiel kann Auswerteeinrichtung 202 lediglich eine Schaltung zum Kombinieren von Signalen sein, und zum Beispiel einen Signaladdierer umfassen. Dabei kann ein Ausgabewert bei übereinstimmenden Signalen beispielsweise gleich null, und bei nicht übereinstimmenden Signalen ungleich null sein. Schlüssel 200 umfasst zudem eine Übertragungseinrichtung 206, welche dazu ausgebildet ist, ein Auslösesignal 208 zum Betätigen der Fahrzeugfunktionalität zu übertragen, basierend auf einem Vergleichsergebnis der erfassten Benutzerdaten 204 mit den vorab hinterlegten Benutzerdaten 210. Übertragungseinrichtung 206 kann zum Beispiel eine elektrische Leiterschleife oder Induktionsspule sein. Dabei kann mittels induktiver Kopplung durch eine äußere Quelle eines elektromagnetischen Feldes ein Strom erzeugt werden, der wiederum ein durch einen äußeren Empfänger wahrnehmbares elektromagnetisches Feld erzeugt. Ferner kann Übertragungseinrichtung 206 ein Sender sein, der optional mit einem Empfänger zu einem gemeinsamen Sendeempfänger gekoppelt sein kann. Ein Sendeempfänger kann somit aktiv, zum Beispiel als Antenne, oder passiv, zum Beispiel als Induktionsspule oder Leiterschleife, ausgeführt sein.

Bei manchen Ausführungsbeispielen ist Übertragungseinrichtung 206 dazu ausgebildet, das Auslösesignal 208 zum Betätigen der Fahrzeugfunktionalität zu übertragen, falls die erfassten Benutzerdaten 204 mit den vorab hinterlegten Benutzerdaten 210 übereinstimmen.

Auslösesignal 208 kann beispielsweise Information über ein anzusprechendes Kraftfahrzeug aufweisen. Alternativ oder optional kann Auslösesignal 208 Information über den Benutzer oder eine Authentizität der Identität des Benutzers aufweisen. Dabei kann gegebenenfalls ein Benutzerprofil mit benutzerspezifischen Einstellungen auf einem Datenspeicher des Fahrzeugs verwendet werden, um eine oder mehrere Fahrzeugfunktionalitäten gemäß der benutzerspezifischen Einstellungen über eine Kontrolleinrichtung des Fahrzeugs anzusteuern. Alternativ kann Auslösesignal 208 die benutzerspezifischen Einstellungen bereits selbst umfassen. Ferner kann Auslösesignal 208 Information über eine anzusteuernde Fahrzeugfunktionalität aufweisen.

Wie bereits beschrieben, kann Auslösesignal 208 durch Auswerteeinrichtung 202 aus einer Mehrzahl von Auslösesignalen, welche jeweils verschiedenen Fahrzeugen zugeordnet sind, ausgewählt werden. Dafür kann Schlüssel 200 beispielsweise einen elektronischen Datenspeicher 212 umfassen, auf dem die Mehrzahl von Auslösesignalen gespeichert ist. Somit kann ein Zugriff auf mehrere Fahrzeuge mit einem gemeinsamen Schlüssel möglich werden.

Mit anderen Worten kann Schlüssel 200 fahrzeugübergreifend genutzt werden, indem er zum Beispiel über eine n:m-Beziehung verschiedenen Fahrzeugen zugordnet ist. Somit können n Nutzer mittels Schlüssel 200 auf m Fahrzeuge zugreifen. Dabei kann m größer 1 sein. Bei einem Ausführungsbeispiel ist n=1 und Schlüssel 200 somit ein persönlicher Schlüssel; jedoch kann n gegebenenfalls auch größer als 1 sein, und somit mehrere Benutzer einen gemeinsamen Schlüssel nutzen, zum Beispiel innerhalb einer Familie mit mehreren Fahrzeugen. Dabei kann die Zuordnung sowohl der Zugangskontrolle, als auch der Personalisierung von Fahrzeugfunktionen dienen. Um dabei einen sicheren Zugang zu erlauben, kann mittels Schlüssel 200 eine eindeutige Personenzuordnung vorgenommen werden, die einen Missbrauch durch andere Personen möglicherweise verhindern kann. Der Fahrzeugnutzer kann so mit nur einem Schlüssel beliebig viele Fahrzeuge nutzen und dabei Komfortfunktionen, wie zum Beispiel eine automatische Einstellung von Spiegel- oder Sitzposition übertragen.

Bei einigen Ausführungsbeispielen ist Speicher 212 des Schlüssels 200 dazu ausgebildet, die vorab hinterlegten Benutzerdaten 210-1 zu speichern. Somit können die vorab hinterlegten Benutzerdaten 210-1 der Auswerteeinrichtung 202 von einer schlüsselinternen Quelle aus zugänglich sein. Bei einem anderen Ausführungsbeispiel können die vorab hinterlegten Benutzerdaten 210-2 der Auswerteeinrichtung 202 von einer schlüsselexternen Quelle aus zugänglich gemacht werden, beispielsweise einem Datenspeicher des Kraftfahrzeugs. Bei manchen Ausführungsbeispielen umfasst Schlüssel 202 ferner einen Empfänger 218, welcher dazu ausgebildet ist, die vorab hinterlegten Benutzerdaten 210-2 von dem Kraftfahrzeug zu empfangen. Benutzerdaten 210-2 können dabei bei dem Kraftfahrzeug hinterlegt sein, was gegebenenfalls ein Löschen eines Benutzerkontos auch dann ermöglichen kann, wenn Schlüssel 200 zeitweise nicht zur Verfügung steht. Ein Anlegen eines neuen Benutzerkontos kann somit gegebenenfalls lediglich durch einen Eingriff auf dem Schlüssel 200 erfolgen, und ein Eingriff auf einem Fahrzeug nicht erforderlich sein.

Empfänger 218 kann, wie in Fig. 2a durch eine gestrichelte Linie angedeutet, getrennt von einer als Sender ausgebildeten Übertragungseinrichtung 206 ausgeführt sein. Alternativ können Sender und Empfänger 218 zusammen einen gemeinsamen Sendeempfänger bilden. Mit anderen Worten kann Übertragungseinrichtung 206 zum Senden und Empfangen ausgebildet sein, beispielsweise als Spule eines RFID-Transponders. Weiterhin kann Übertragungseinrichtung 206 jeweils einen dedizierten Sender und Empfänger 218 umfassen.

Bei manchen Ausführungsbeispielen umfasst Schlüssel 200 ferner einen Sensor 214, welcher dazu ausgebildet ist, die den Benutzer eindeutig charakterisierenden biometrische Benutzerdaten 204 von dem Benutzer zu erfassen. Sensor 214 ist dabei elektrisch an Auswerteeinrichtung 202 gekoppelt. Sensor 214 kann zum Beispiel ein Fingerabdrucksensor, Irissensor, akustischer Sensor zum Erfassen einer Stimmfrequenz oder Beschleunigungssensor zum Messen einer charakteristischen Gangart des Benutzers (zum Beispiel über Beschleunigungsverläufe) sein. Weiterhin kann Sensor 214 dazu ausgebildet sein, charakteristische Merkmale eines Herzschlags des Benutzers zu messen, zum Beispiel einen Herzschlagrhythmus, elektrische Signale oder Druckverläufe. Sensor 214 kann dazu ausgebildet sein, die biometrischen Benutzerdaten 204 kontinuierlich oder periodisch, oder auch zu einem konkreten Zeitpunkt zu erfassen. Bei einem anderen Ausführungsbeispiel kann Sensor 214 auch entfallen, und eine Authentisierung des Benutzers mittels einer Identifikationsnummer (PIN) erfolgen. Hierzu kann zum Beispiel eine Eingabeeinrichtung von dem Schlüssel 200 umfasst sein. Diese kann gegebenenfalls als physischer oder auf einer Anzeigeeinrichtung virtuell dargestellter Zahlenblock ausgebildet sein.

Schlüssel 200 kann bei manchen Ausführungsbeispielen eine klassische Gestalt, zum Beispiel einen Griff und einen Schlüsselbart umfassend, aufweisen. Schlüssel 200 kann alternativ als am Körper des Benutzers getragenes Schmuckstück, zum Beispiel Halskette, ausgeführt sein. Bei manchen Ausführungsbeispielen kann eine derzeitige "Standardbauform" für Schlüssel 200 verwendet werden, welche eine Funkfernbedienung mit Tasten und/oder einen Notschlüssel zum Ausklappen oder Herausziehen aufweisen kann. Ein Fahrzeugschlüssel in derartiger Standardbauform kann, zum Beispiel in der Hosentasche des Benutzers getragen, auch dazu ausgebildet sein, vermittels Beschleunigungssensoren den Benutzer anhand seiner Gangart zu identifizieren.

Bei einigen Ausführungsbeispielen ist Schlüssel 200 ferner dazu ausgebildet, an einem Handgelenk des Benutzers getragen zu werden. Anders ausgedrückt kann Schlüssel 200 von einem Armband umfasst sein. Dies kann einen verbesserten Körperkontakt bewirken, der unter Umständen eine Erfassung biometrischer Benutzerdaten erleichtern kann. Beispielsweise kann Sensor 214 einen Pulsmesser umfassen, welcher, am Handgelenk des Benutzers getragen, dazu ausgebildet ist, charakteristische Merkmale eines Herzschlags des Benutzers zu messen. Anders ausgedrückt kann Schlüssel 200 in Form eines Armbands umgesetzt werden, welches durch den direkten Körperkontakt zum Benutzer auf einfachere Art biometrische Daten zur Identifikation erfassen kann. Dabei kann das Armband bei einem Ausführungsbeispiel sowohl kontinuierlich Daten erfassen, als auch zum Beispiel beim Anlegen ermitteln, welches der aktuelle Nutzer ist, und diese Daten bis zur gewünschten Authentifizierung speichern. Manipulation kann beispielsweise durch eine Überwachung eines Verschlusses des Armbands verhindert werden. Dabei können die Personalisierungsinformationen auf Schlüssel 200, und die Zugangsinformationen im Fahrzeug gespeichert sein.

Bei einigen Ausführungsbeispielen ist Empfänger 218 dazu ausgebildet, ein Anfragesignal 216 von dem Kraftfahrzeug zu empfangen. Durch Anfragesignal 216 kann ohne weiteren Benutzereingriff das Senden des Auslösesignals 208 initiiert werden. Auch kann eine Aktivierung von Funktionalitäten des Schlüssels 200 durch den Empfang des Anfragesignals 216 ausgelöst werden. Bei manchen Ausführungsbeispielen ist Auswerteeinrichtung 202 ferner dazu ausgebildet, Auslösesignal 208 basierend auf Anfragesignal 216 auszuwählen. Dadurch kann eine Benutzereingabe zum Auswählen des Auslösesignals 216 möglicherweise entfallen.

Bei manchen Ausführungsbeispielen ist Speicher 212 dazu ausgebildet, dem Benutzer individuell zugeordnete Zugriffsdaten 222-1 zum Betätigen der Fahrzeugfunktionalität des Kraftfahrzeugs und/oder einer weiteren Fahrzeugfunktionalität eines weiteren Kraftfahrzeugs zu speichern. Die Zugriffsdaten 222-1 können beispielsweise universell auf mehrere Fahrzeuge anwendbare Daten, wie Spiegel- oder Sitzeinstellungen, oder auch fahrzeugspezifische Daten, wie einen Zugriffscode zum Entriegeln einer Tür oder Anlassen eines Motors, umfassen. Diese Zugriffsdaten 222-1 können an die Auswerteeinrichtung 202 zur Erzeugung des Auslösesignals 208 übergeben werden, und Auslösesignal 208 kann die Zugriffsdaten 222-1 umfassen. Dabei ist Sender 206 dazu ausgebildet, die Zugriffsdaten 222-1 zu senden. Alternativ können Zugriffsdaten 222-1 gemeinsam mit Auslösesignal 208 an das Fahrzeug übermittelt werden. Dadurch können möglicherweise benutzerspezifische Einstellungen in verschiedenen Fahrzeugen übernommen, oder auch zwischen diesen übertragen werden. Das Fahrzeug kann zusammen mit dem Auslösesignal 208 konkrete Anweisungen bekommen, in welcher Weise eine Fahrzeugfunktionalität zu betätigen ist. Dies kann zum Beispiel ein Neigen oder Verschieben von Spiegeln oder einem Sitz in eine benutzerdefinierte Position umfassen.

Mit anderen Worten können persönliche Fahrzeugeinstellungen beispielsweise auf dem Schlüssel, oder bei weiteren Ausführungsbeispielen auch fahrzeugseitig, in einem Format gespeichert werden, welches es erlauben kann, die Einstellungen auf beliebigen Fahrzeugen anzuwenden. Dies kann vorzugsweise modell- oder herstellerübergreifend, mindestens jedoch bei verschiedenen Fahrzeugen des gleichen Typs erfolgen. Das Format kann dabei eine Standardisierung aufweisen, die zum Beispiel die Speicherung verbreiteter, modell- oder herstellerunabhängiger Einstellungen (zum Beispiel Grundfunktionen von Sitz und Spiegel), und optional ferner modell- bzw. herstellerspezifischer Erweiterungen (zum Beispiel spezielle herstellereigene Kundendienste oder erweiterte Funktionen von Sitz und Spiegel) erlauben kann. Auf diese Weise kann es dem Nutzer ermöglicht werden, personalisierte Einstellungen zwischen Privat-, Firmen-, Carsharing- und/oder Mietfahrzeugen mitzunehmen. Die eindeutige Personenzuordnung des Schlüssels durch den Vergleich biometrischer Benutzerdaten 204 mit hinterlegten Benutzerdaten 210 kann es ferner ermöglichen, eine spezielle Rechtezuordnung zwischen Fahrzeug und Nutzer vorzunehmen. Dies kann verhindern, dass der Schlüssel 200 von einer anderen Person als dem Eigentümer genutzt wird. Hierfür kann beispielsweise die Zugangsberechtigung zum Fahrzeug nur für eine bestimmte Kombination aus Person und Schlüssel 200 freigeschaltet sein. Stimmen erfasste biometrische Benutzerdaten 204 nicht mit hinterlegten Benutzerdaten 210 überein, kann zum Beispiel ein Senden oder Übertragen des Auslösesignals 208 unterdrückt werden. Dies kann ein Unterbrechen eines elektrischen Kontaktes zwischen Auswerteeinrichtung 202 und Übertragungseinrichtung 206, oder auch einen Abbruch des Erzeugens des Auslösesignals 208 durch Auswerteeinrichtung 202 umfassen. Gemäß alternativen Ausführungsbeispielen kann auch ein Status der Übereinstimmung oder Authentisierung übertragen werden, um im Fahrzeug geprüft zu werden. Mit anderen Worten kann der Status der Übereinstimmung Informationen wie zum Beispiel "ja", "nein" oder "welcher Benutzer" umfassen, oder anders ausgedrückt, ob eine Übereinstimmung vorliegt, oder welcher Benutzer von mehreren Benutzern mit verschiedenen Nutzungsrechten aktuell den Schlüssel trägt und/oder verwendet. Dies kann insbesondere bei mehreren einem Schlüssel zugeordneten Benutzern hilfreich sein, da das Fahrzeug sonst u. U. nicht wissen kann, welche Person aktuell am Schlüssel authentisiert ist.

Anders ausgedrückt kann ein elektronischer Fahrzeugschlüssel gemäß einigen Ausführungsbeispielen für den Zugang zu mehreren Fahrzeugen genutzt werden. Schlüssel 200 kann über eine Personenzuordnung gegen Missbrauch geschützt sein. Schlüssel 200 kann in den Händen eines anderen Nutzers keine Rechte zum Zugriff auf eine Fahrzeugfunktionalität mehr besitzen, und somit womöglich für den anderen Nutzer nutzlos sein. Dabei kann die Personenzuordnung, wie beschrieben, auf unterschiedliche Weise erreicht werden.

Fig. 2b zeigt ein Blockdiagramm eines Ausführungsbeispiels eines Kraftfahrzeugs 250 mit wenigstens einer Fahrzeugfunktionalität. Kraftfahrzeug 250 ist bevorzugt ein Personen- oder Lastkraftfahrzeug (PKW oder LKW), kann jedoch unter Umständen auch ein Wasserfahrzeug, Luftfahrzeug, Schienenfahrzeug, Raumfahrzeug oder Amphibienfahrzeug, aber auch elektrisches (E-) Fortbewegungsmittel, wie beispielsweise Segway, LastMileSurfer oder E-Bike sein. Kraftfahrzeug 250 und davon umfasste Fahrzeugfunktionalitäten können durch Zusammenwirken mit dem in Fig. 2a beschriebenen Schlüssel 200, und/oder gemäß dem in Fig. 1 beschriebenen Verfahren 100 betätigt werden. Kraftfahrzeug 250 umfasst eine Kontrolleinrichtung 254 mit einem Empfänger 256, welcher dazu ausgebildet ist, ein Auslösesignal 208 für die Fahrzeugfunktionalität von einer fahrzeugexternen Kraftfahrzeugzugriffsvorrichtung 200 zu empfangen. Empfänger 256 kann insbesondere dafür geeignet sein, Auslösesignal 208 drahtlos zu empfangen, beispielsweise durch Mittel der Nahfeldkommunikation. Empfänger 256 kann zum Beispiel ein Funkempfänger oder Infrarotempfänger sein, und weiterhin beispielsweise der Kontrolleinrichtung 254 zugeordnet, oder mit dieser gekoppelt sein. Kontrolleinrichtung 254 ist dazu ausgebildet, in Folge des Auslösesignals 208 ein Steuersignal 258 zum Betätigen der Fahrzeugfunktionalität bereitzustellen. Kraftfahrzeug 250 umfasst zudem ein Steuergerät 252, welches dazu ausgebildet ist, die Fahrzeugfunktionalität in Reaktion auf Steuersignal 258 zu betätigen. Steuergerät 252 kann dabei insbesondere eine Türverriegelung, ferner aber auch ein Aktuator zum Einstellen eines Spiegels oder Sitzes oder ein Anlasser eines Motors sein. Kraftfahrzeug 250 kann mehrere verschiedene Steuergeräte 252-1; 252-2 umfassen, die vermittels verschieden gearteter Steuersignale 258-1; 258-2 ansteuerbar sein können. Eine Artung der Steuersignale 258-1; 258-2 kann dabei von der jeweiligen Fahrzeugfunktionalität abhängen, und zum Beispiel einfache, binäre Anweisungen wie "Tür verriegeln" oder "Tür entriegeln" (zum Beispiel dementsprechend Werte wie "high", "low", "0" oder "1"), aber auch detailliertere Daten wie einen einzustellenden Neigungswinkel eines Seitenspiegels umfassen.

Bei manchen Ausführungsbeispielen umfasst Kraftfahrzeug 250 ferner einen elektronischen Datenspeicher 260, welcher dazu ausgebildet ist, die vorab hinterlegte Benutzerdaten 210-2 zum Vergleich mit biometrischen Benutzerdaten 204, die den Benutzer des Kraftfahrzeugs 250 eindeutig charakterisieren, zu speichern. Dadurch kann dem Fahrzeug 250 Information zugänglich sein, welcher Benutzer zur Fahrzeugnutzung berechtigt ist, und diese Information gegebenenfalls auch nach Verlust des Schlüssels 200 geändert oder gelöscht werden.

Bei einigen Ausführungsbeispielen ist Speicher 260 dazu ausgebildet, dem Benutzer individuell zugeordnete Zugriffsdaten 222-2 zum Betätigen der Fahrzeugfunktionalität zu speichern. Der Benutzer kann somit komfortabel auf individuelle Einstellungen zurückgreifen. Zugriffsdaten 222 können somit von dem Schlüssel 200 empfangene Zugriffsdaten 222-1, oder alternativ intern auf dem Speicher 260 des Fahrzeugs 250 hinterlegte Zugriffsdaten 222-2 sein.

Bei manchen Ausführungsbeispielen ist Steuergerät 252 dazu ausgebildet, die Fahrzeugfunktionalität vermittels des Steuersignals 258 und basierend auf den Zugriffsdaten 222 zu betätigen. Eine Nutzung der dem Benutzer individuell zugeordneten Zugriffsdaten 222 kann darüber hinaus in mehreren Fahrzeugen erreicht werden. Dabei können Zugriffsdaten, wie bereits erwähnt, auf einem Speicher 212 des Schlüssels 200, oder einem Speicher 260 des Fahrzeugs 250 hinterlegt sein, oder auch sowohl fahrzeug- als auch schlüsselseitig. Zugriffsdaten 222 können jedoch im Laufe der Zeit durch den Benutzer geändert, erweitert oder gelöscht werden. Dabei kann bei einigen Ausführungsbeispielen ein regelmäßiger oder benutzergesteuerter Datenabgleich durchgeführt werden. Dabei können Zugriffsdaten 222 auf einem Speicher mit zeitlich aktuelleren Zugriffsdaten 222 auf einem anderen Speicher überschrieben werden. Dieser Datenabgleich kann wenigstens zwischen Schlüssel 200 und Fahrzeug 250 stattfinden, aber auch zwischen Schlüssel 200 und einem weiteren Fahrzeug. Ferner kann der Datenabgleich auch zwischen dem Fahrzeug 250 und einem in Kommunikationsreichweite (zum Beispiel bis zu 20 oder 50 m) befindlichen weiteren Fahrzeugs, welches dem Benutzer mittels Schlüssel 200 zugänglich ist, stattfinden. Der Datenabgleich kann über eine direkte drahtlose Verbindung, aber alternativ auch mittels eines (zum Beispiel durch den Fahrzeughersteller bereitgestellten) Servers über eine Netzwerkverbindung erfolgen.

Bei einigen Ausführungsbeispielen umfasst Kraftfahrzeug 250 ferner einen Sensor 262, welcher dazu ausgebildet ist, in Reaktion auf eine Berührung durch den Benutzer ein Sensorsignal 264 bereitzustellen. Dabei umfasst die Kontrolleinrichtung einen Sender 266, welcher dazu ausgebildet ist, in Reaktion auf das Sensorsignal 264 das Anfragesignal 216 an die fahrzeugexterne Kraftfahrzeugzugriffsvorrichtung, bzw. den Schlüssel 200, zu senden. Dies kann beispielsweise verhindern, dass mittels eines gemeinsamen Schlüssels 200 mehrere Fahrzeuge gleichzeitig ein entsprechendes Auslösesignal 208 erhalten, dadurch entriegelt werden, und ein von dem Benutzer nicht gefahrenes Fahrzeug unverriegelt zurückbleibt. Optional kann eine Verriegelung eines unbeabsichtigt entsperrten Fahrzeugs basierend auf Ablauf eines Zeitzählers oder bei Entfernen des Schlüssels 200 aus dem Nahfeldkommunikationsbereichs des entsprechenden Fahrzeugs erfolgen. Sensor 262 kann zum Beispiel von einem Türgriff des Fahrzeugs 250 umfasst sein, und auf Berührung des Benutzers durch Erzeugen des Sensorsignals 264 reagieren.

Sender 266 kann ferner dazu ausgebildet sein, die zuvor hinterlegten Benutzerdaten 210-2 an den Schlüssel 200 zu senden, sofern die zuvor hinterlegten Benutzerdaten 210-2 auf dem fahrzeugseitigen Speicher 260 hinterlegt sind. Sender 266 und Empfänger 256 können, wie durch die gestrichelte Linie in Fig. 2b angedeutet, baulich getrennt und/oder jeweils als dedizierter Sender, bzw. Empfänger ausgeführt sein. Alternativ können Sender 266 und Empfänger 256 von einem gemeinsamen Sendeempfänger umfasst sein. So kann zum Beispiel eine Antenne zum Senden und Empfangen von Daten geeignet sein. Sender 266, Empfänger 256, Kontrolleinrichtung 254 und Speicher 260 können weiterhin von einem Fahrerassistenzsystem oder Fahrzeugcomputer 268 umfasst sein, welcher elektrisch oder elektronisch an Sensor 262 und ein oder mehrere Steuergeräte 252 gekoppelt ist.

Nochmals mit anderen Worten erklärt, kann eine Speicherung der Zugangsberechtigungen auf dem Schlüssel 200 erfolgen. Dafür kann auf dem Schlüssel 200 Information darüber hinterlegt sein, welche Fahrzeuge und welche Funktionen dieser Fahrzeuge von einem Benutzer genutzt werden dürfen. Eine Speicherung der Personalisierungsinformationen kann im Fahrzeug 250 erfolgen. Dafür kann im Fahrzeug 250 Information hinterlegt sein, welcher Benutzer (sofern dieser durch den Schlüssel 200 identifiziert wurde) welche persönlichen Einstellungen hat.

Überdies kann es bei manchen Ausführungsbeispielen möglich sein, dass mehrere Benutzer den Schlüssel 200 für mehrere Fahrzeuge verwenden können. Dabei kann ein Hauptbenutzer als Administrator fungieren, und Rechte für Zugriffe auf Fahrzeuge und deren Funktionalitäten an andere Benutzer vergeben. Die anderen Benutzer können gegenüber dem Administrator reduzierte Rechte besitzen. Alternativ kann Schlüssel 200 auf dem Speicher 212 hinterlegte Daten aufweisen, welche Information darüber umfassen, welche Rechte welchem Benutzer aus einer Mehrzahl von Benutzern zugeordnet sind. Weiterhin kann Speicher 260 des Fahrzeugs 250 diese Daten aufweisen, und über Kontrolleinrichtung 254 Rechte an verschiedene Benutzer vergeben werden. Für ein Einfordern von Zugriffsrechten eines Benutzers auf ein Fahrzeug und dessen Funktionalitäten kann außerdem ein Übermitteln von charakteristischen Informationen über den Schlüssel und über den Benutzer erforderlich sein. Anders ausgedrückt können bestimmte Fahrzeugfunktionalitäten lediglich durch Bestätigen einer vorgegebenen Kombination aus Benutzer und Schlüssel bedient werden.

Bei noch einem weiteren Ausführungsbeispiel kann Schlüssel 200 lediglich den biometrischen Sensor 214 und Übertragungseinrichtung 206 umfassen. Dabei können weitere Schritte des Verfahrens 100 (s. Fig. 1), die dem Erfassen 120 der biometrischen Benutzerdaten folgen, fahrzeugseitig erfolgen. Das Vergleichen 140 der erfassten biometrischen Benutzerdaten 204 mit den vorab hinterlegten Benutzerdaten 210 kann dabei durch die Kontrolleinrichtung 254 des Fahrzeugs 250 erfolgen. Das Übertragen 160 des Auslösesignals 216 kann weiterhin innerhalb der Kontrolleinrichtung 254 des Fahrzeugs 250 erfolgen. Beispielsweise kann ein Ausgabewert eines Vergleichsalgorithmus zu Durchführen des Vergleichens 140 von dem Auslösesignal 208 umfasst sein, und als Eingabewert für einen Erzeugeralgorithmus zum Erzeugen des Steuersignals 258 dienen, durch welches die Fahrzeugfunktionalität betätigt werden kann. Auslösesignal 208 kann zudem zum Beispiel eine Information über eine Freigabe zur Betätigung einer Fahrzeugfunktionalität oder eine Aufforderung zum Erzeugen des Steuersignals 258 umfassen.

Bei weiteren Ausführungsbeispielen kann es durch die Personenzuordnung möglich sein, ein persönliches Fahrtenbuch für den Fahrzeugnutzer einzuführen, welches auf dem Schlüssel gespeichert wird. Dieses kann für persönliche Auswertungen und Statistiken, aber auch für gesetzliche Nachweise genutzt werden. Optional oder alternativ können die Fahrzeuge jedoch auch ein Fahrtenbuch führen, da nun bekannt ist, wer zu welchem Zeitpunkt mit dem Fahrzeug gefahren ist. Auf diese Weise kann möglicherweise ein Verwaltungsaufwand für Firmen- bzw. Flottenfahrzeuge verringert werden.

Der Schlüssel kann bei noch weiteren Ausführungsbeispielen auch für andere Schließsysteme genutzt werden, zum Beispiel Funkschlösser an Haus- und Wohnungstüren. Für die Authentifizierung an der Tür kann ein Funkverfahren genutzt werden. Dieses kann auch genutzt werden, um einen oder mehrere Schlüssel zu orten, oder um festzustellen, welche Personen sich wo im Fahrzeug befinden.

Bei solchen Ausführungsbeispielen, bei denen eine biometrische Personenidentifikation, wie zuvor beschrieben folgt, kann gegebenenfalls verhindert werden, dass der Schlüssel im Anschluss weitergegeben oder gar entwendet wird. Ferner kann dies unter Umständen durch eine zusätzliche Maßnahme (zum Beispiel Armband mit Manipulationsschutz) unterbunden werden.
Bei einigen Ausführungsbeispielen, bei denen die Speicherung der Personalisierungsdaten im Schlüssel erfolgt, kann gegebenenfalls ein Mitnehmen dieser Informationen zu beliebigen

Fahrzeugen ermöglicht werden. So kann der Nutzer seine persönlichen Einstellungen auch bei neuen Fahrzeugen sogar uneingeschränkt nutzen. Eine Datenübertragung der Einstellungen von Fahrzeug zu Fahrzeug (beispielsweise über einen zentralen Dienst) kann dabei womöglich entfallen. Bei einer Speicherung der Zugangsrechte im Fahrzeug bzw. im Schloss kann eventuell erreicht werden, dass Änderungen der Berechtigungen (Hinzufügen, Entfernen oder zeitliche Begrenzung) auch bei Abwesenheit des Schlüssels möglich sind.

Durch Ausführungsbeispiele kann so die Benutzerzufriedenheit und das Komfortempfinden des Benutzers unter Umständen maßgeblich erhöht werden. Beispielsweise kann der Benutzer einen gemeinsamen Schlüssel für beliebig viele Fahrzeuge verwenden. Persönliche Einstellungen können dabei fahrzeugübergreifend mitgenommen werden. Der persönliche Schlüssel des Benutzers kann gegebenenfalls besser vor Missbrauch durch andere Personen geschützt werden. Eine beschriebene Verwendung von biometrischen Daten in Kombination mit Schloss und Schlüsseldaten kann gegenüber einer reinen Authentifizierung mittels biometrischer Daten (ohne Schlüssel) erreichen, dass der Schlüssel physisch bewusst erhalten bleibt, und beispielsweise weiterhin als Statussymbol für den Benutzer oder Werbung für den Hersteller dienen kann. Durch den Schlüssel kann ferner eine Datensicherheit verbessert werden. Unter anderem können Fertigung des Schlüssels und Bereitstellung von Software einem Hersteller und nicht einem Drittanbieter obliegen. Das System kann daher nicht offen oder bekannt sein, wodurch eine Interaktion in einem geschlossenen System möglich sein kann. Das Internet kann gegebenenfalls nur als Übertragungsmedium genutzt werden. Zusätzliche Dienste können weiterhin mit dem Schlüssel möglicherweise genutzt werden. Ferner kann eine Kompatibilität verbessert werden. Beispielsweise kann eine Reaktion auf Hardware- oder Softwareänderungen von anderen Geräten und/oder Herstellern, etwa ein herstellerseitiges Entfernen von Nahfeldkommunikationseinrichtungen eines Mobiltelefons, entfallen.

Einige der beschriebenen Ausführungsbeispiele können auf herkömmliche Türen in Gebäuden und auf andere verschließbare Gegenstände ausgeweitet werden, indem diese mit entsprechenden elektronischen Schließzylindern bzw. Schließmechanismen ausgestattet werden. Somit können gemäß einem weiteren Ausführungsbeispiel elektronische Schließzylinder für eine Nachrüstung herkömmlicher Haus- und Wohnungstüren umfasst sein, sodass der Benutzer mit dem beschriebenen Schlüssel auch Haus und/oder Büro betreten kann. Dies kann die Anzahl der benötigten Schlüssel weiter reduzieren und eine Zufriedenheit des Benutzers erhöhen.

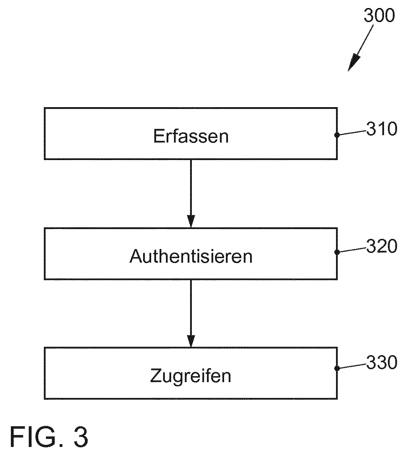

Fig. 3 zeigt ein Blockdiagramm eines weiteren Verfahrens 300 für ein System mit einer Kraftfahrzeugzugriffsvorrichtung und wenigstens einem Kraftfahrzeug. Verfahren 300 umfasst ein Erfassen 310 von einen Benutzer des Kraftfahrzeugs eindeutig charakterisierenden biometrischen Benutzerdaten. Verfahren 300 umfasst zudem ein Authentisieren 320 des Benutzers basierend auf einer Kombination der biometrischen Benutzerdaten und einer eindeutigen, dem Benutzer zugeordneten Benutzerkennung durch die Kraftfahrzeugzugriffsvorrichtung. Verfahren 300 umfasst ferner ein Zugreifen 330 des Benutzers basierend auf einer Kombination der biometrischen Benutzerdaten und einer eindeutigen, der Kraftfahrzeugzugriffsvorrichtung zugeordneten Schlüsselkennung auf wenigstens eine Fahrzeugfunktionalität des wenigstens einen Kraftfahrzeugs. Somit kann ein Missbrauch eines Schlüssels leichter vermieden werden, oder auch eine Unterscheidung des Systems zwischen mehreren verschiedenen Benutzern mit gegebenenfalls unterschiedlichen Rechten möglich werden.

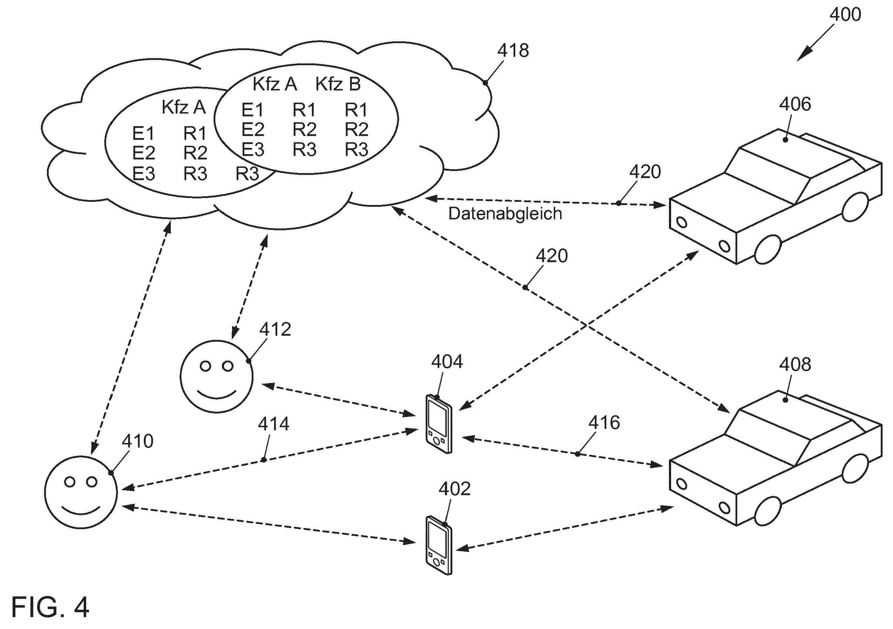

Für eine Speicherung von Personalisierungen und Berechtigungen werden weitere Ausführungsbeispiele im Folgenden beschrieben. Hierzu zeigt Fig. 4 ein System 400, welches einen ersten Schlüssel 402 mit einer eindeutigen ersten Schlüsselkennung, einen zweiten Schlüssel 404 mit einer eindeutigen zweiten Schlüsselkennung, ein erstes Kraftfahrzeug 406 (auch als Kfz A bezeichnet) mit einer eindeutigen ersten Fahrzeugkennung und ein zweites Kraftfahrzeug 408 (auch als Kfz B bezeichnet) mit einer eindeutigen zweiten Fahrzeugkennung umfasst. An einer Nutzung können beispielsweise ein erster Benutzer 410 und optional ein zweiter Benutzer 412 beteiligt sein. Innerhalb des Systems 400 kann es erforderlich sein, für die Benutzer 410; 412 sowohl persönliche Einstellungen (E1, E2, E3, usw.) als auch Berechtigungen (R1, R2, R3, usw.) zu speichern. Die Ziffern 1, 2, 3, usw. können dabei verschiedene Fahrzeugfunktionalitäten bezeichnen (zum Beispiel E1 = Sitzeinstellungen, E2 = Radioeinstellungen, E3 = Spiegeleinstellungen, R1 = Tür öffnen, R2 = Motor starten, R3 = Tankdeckel öffnen). Beispielsweise können die Einstellungen E1, E2 und E3 sowie die Rechte R1, R2 und R3 dem ersten Benutzer 410, und dagegen lediglich die Einstellungen E1 und E2 sowie das Recht R1 dem zweiten Benutzer 412 zugeordnet sein. Bei einem anderen Ausführungsbeispiel bezeichnen EX und RX Sätze von mehreren Einstellungen und Berechtigungen. Dabei sind E1, R1 dem ersten Benutzer 410, und E2, R2 dem zweiten Benutzer 412 zugeordnet. Weiterhin sind dem ersten Benutzer 410 eine eindeutige erste Benutzerkennung, und dem zweiten Benutzer 412 eine eindeutige zweite Benutzerkennung zugeordnet, beispielsweise ein Log-In-Name, Benutzername oder eine Identifikationsnummer.

Die Einstellungen können vorzugsweise fahrzeugunabhängig, und in einem standardisierten Format gespeichert sein, welches es erlaubt, diese in einem beliebigen Fahrzeug 406; 408 anzuwenden (sofern das Fahrzeug 406; 408 über die entsprechende Funktion verfügt). Die Berechtigungen hingegen können bei einem Ausführungsbeispiel fahrzeugspezifisch, und an die Verwendung eines bestimmten Schlüssels 402; 404 gebunden sein. Die Beschränkung der Berechtigungen auf bestimmte Schlüssel 402; 404 kann dabei sowohl umsetzungs- als auch sicherheitstechnische Gründe haben.

Im Folgenden wird ein Ausführungsbeispiel für die Abbildung und Speicherung der Einstellungen und Berechtigungen beschrieben. Eine Zuordnung zwischen Benutzer 410; 412 und Schlüssel 402; 404, oder zwischen Schlüssel 402; 404 und Fahrzeug 406; 408 kann dabei zunächst angelernt werden. Bei manchen Ausführungsbeispielen umfasst dementsprechend das in Fig. 3 beschriebene Verfahren 300 ferner ein Anlernen der Kombination der biometrischen Benutzerdaten und der dem Benutzer zugeordneten Benutzerkennung auf der Kraftfahrzeugzugriffsvorrichtung. Das Anlernen kann einem Speichern von biometrischen Benutzerdaten und der Benutzerkennung auf dem Schlüssel 402; 404 entsprechen. In Fig. 4 wird beispielsweise eine erste Datenkombination 414, welche biometrische Benutzerdaten und die eindeutige Benutzerkennung des ersten Benutzers 410 umfasst, auf dem zweiten Schlüssel 404 gespeichert, oder mit anderen Worten angelernt. Beim Anlernen des Benutzers 410; 412 an den Schlüssel 402; 404 können die zur Authentifizierung des Benutzers 410; 412 erforderlichen biometrischen Daten erfasst, und in einer Form im Schlüssel 402; 404 gespeichert werden, dass der Schlüssel 402; 404 den Benutzer 410; 412 zukünftig als berechtigt für die Verwendung des Schlüssels 402; 404 authentifizieren kann.
Auf diese Weise kann der Schlüssel 402; 404 eine (gegebenenfalls endliche, beschränkte) Anzahl an Personen als gültige Benutzer 410; 412 des Schlüssels 402; 404 authentifizieren. Andere, nicht angelernte Personen können als "Fremdbenutzer" erkannt werden. Der Anlernvorgang kann direkt am Schlüssel 402; 404 bzw. unter Verwendung des Schlüssels 402; 404 stattfinden.

Bei einigen Ausführungsbeispielen umfasst das in Fig. 3 beschriebene Verfahren 300 ferner ein Anlernen der Kombination der biometrischen Benutzerdaten und der der Kraftfahrzeugzugriffsvorrichtung zugeordneten Schlüsselkennung auf dem Kraftfahrzeug. Bevor beispielsweise der erste Benutzer 410 den zweiten Schlüssel 404 für den Zugang zum zweiten Fahrzeug 408 verwenden kann, wird der zweite Schlüssel 404 zuvor an das zweite Fahrzeug 408 angelernt. Dies kann zum einen die Sicherheit erhöhen, zum anderen kann dadurch der Energieverbrauch der Schlüssel 402; 404 reduziert werden, beispielsweise, da diese nur auf die Funksignale bestimmter Fahrzeuge reagieren müssen. Gemäß aktueller LF-Funktechnik kann somit auch ein Aufwachen nur bei Signalen bestimmter Fahrzeuge ermöglicht werden. Das Fahrzeug 406; 408 kann hierfür eine (gegebenenfalls endliche, beschränkte) Menge zulässiger Schlüssel 402; 404 speichern. In Fig. 4 erfolgt zum Beispiel ein Abspeichern einer zweiten Datenkombination 416, welche biometrische Benutzerdaten des ersten Benutzers 410 und die eindeutige Schlüsselkennung des zweiten Schlüssels 404 umfasst, auf dem zweiten Fahrzeug 408. Der Anlernvorgang kann direkt am Fahrzeug 406; 408 stattfinden und kann beispielsweise durch einen Besitzer des Fahrzeugs 406; 408 durchgeführt werden. Gegebenenfalls kann dafür vorübergehend eine Verbindung zu einem zentralen Verwaltungssystem verwendet werden.

Alternativ kann der Anlernvorgang auch an einem separaten Terminal stattfinden, welches dann für den Anlernvorgang eine gesicherte Direktverbindung mit dem Fahrzeug 406; 408 aufbaut um auch aus der Ferne ein Anlernen vornehmen zu können (zum Beispiel in einer Mietwagenzentrale). Einstellungen (zum Beispiel E1, E2 und E3) und Rechte (zum Beispiel R1, R2 und R3) sind vorzugsweise in einem zentralen System 418 (zum Beispiel einem Internetserver, "Cloud") abgelegt und können von Fahrzeug 406; 408 jederzeit abgefragt werden. Fahrzeug 406; 408 kann zusätzlich jederzeit eine lokale Kopie 420 der ihm bekannten Einstellungen und Berechtigungen für den Fall erhalten, dass das zentrale System 418 einmal nicht verfügbar ist. Mit anderen Worten kann ein Datenabgleich zwischen zentralem System 418 und Fahrzeugen 406; 408 stattfinden. Weiterhin kann, wenn eine Änderung von Einstellungen und Berechtigungen, welche lokal im Fahrzeug 406; 408 stattgefunden hat, in das zentrale System 418 hochgeladen werden, und eine dort hinterlegte, ältere Version ersetzen.

Ein an ein Fahrzeug 406; 408 angelernter Schlüssel 402; 404 kann dazu ausgebildet sein, mit dem entsprechenden Fahrzeug 406; 408 zu kommunizieren. Wird ein entsprechender Schlüssel 402; 404 in der Nähe des Fahrzeugs 406; 408 erkannt (zum Beispiel durch automatische Erkennung oder bei Nutzeraktion am Türgriff), so kann das Fahrzeug 406; 408 die Berechtigungen des Benutzers, der den Schlüssel 402; 404 aktuell trägt, im zentralen System 418 ("Cloud") nachschlagen.

Der Besitzer des Fahrzeugs 406; 408 kann darüber hinaus definieren, welche Rechte Nutzer für das Fahrzeug erhalten sollen, die am Schlüssel 402; 404 authentifiziert wurden, jedoch (noch) keine Berechtigung für das Fahrzeug 406; 408 haben, und welche Rechte Nutzer haben, die am Schlüssel 402; 404 nicht authentifiziert wurden (zum Beispiel wenn der Nutzer dem Schlüssel 402; 404 nicht bekannt ist). Eine Authentisierung des ersten Benutzers 410 an dem zweiten Schlüssel 404 beispielsweise kann durch Erfassen dessen biometrischer Benutzerdaten und Empfangen seiner individuellen Benutzerkennung erfolgen. Die individuellen Benutzerkennungen der Benutzer 410; 412 können auf Seiten des Schlüssels 402; 404, oder weiterhin im zentralen System 418 gespeichert sein.

Ein Benutzer 410; 412 kann gemäß einem Ausführungsbeispiel lediglich dann für die Benutzung eines Fahrzeugs 406; 408 berechtigt sein, wenn eine Mehrzahl an Bedingungen erfüllt ist. Eine solche Bedingung kann sein, dass der Benutzer 410; 412 Berechtigungen für das Fahrzeug 406; 408 erhalten hat (diese können zum Beispiel im zentralen System 418 hinterlegt sein). Eine weitere Bedingung kann sein, dass der Benutzer 410; 412 an einen Schlüssel 402; 404 angelernt ist. Noch eine weitere Bedingung kann sein, dass der Schlüssel 402; 404, welcher an den Benutzer 410; 412 angelernt ist, auch an das Fahrzeug 406; 408 angelernt ist.

Das Anlernen kann also auch vermittels Datenkommunikation zwischen einem zentralen Server bzw. System 418 und einer Kraftfahrzeugzugriffsvorrichtung 402, 404 und/oder einem Kraftfahrzeug 406; 408 erfolgen, beispielsweise indem biometrische Benutzerdaten und/oder Benutzer-/Schlüsselkennung vom zentralen Server 418 an Kraftfahrzeugzugriffsvorrichtung 402, 404 und/oder Kraftfahrzeug 406; 408 übermittelt werden.

Beispielhaft verdeutlichen gestrichelte Pfeile in Fig. 4, zwischen welchen Benutzern und Komponenten des Systems 400 Anlernprozesse bestehen. So ist der erste Benutzer 410 auf den ersten Schlüssel 402 und den zweiten Schlüssel 404, und der zweite Benutzer 412 auf lediglich den zweiten Schlüssel 404 angelernt. Der erste Schlüssel 402 und der zweite Schlüssel 404 sind an das zweite Fahrzeug 408 angelernt. Der zweite Schlüssel 404 ist ferner an das erste Fahrzeug 406 angelernt. Daraus ergeben sich folgende, beispielhafte Konstellationen: Der erste Benutzer 410 kann mit dem ersten Schlüssel 402 oder dem zweiten Schlüssel 404 auf das zweite Fahrzeug 408, und weiterhin mit dem zweiten Schlüssel 404 auf das erste Fahrzeug 406 zugreifen. Jedoch kann der erste Benutzer 410 nicht mit dem ersten Schlüssel 402 auf das zweite Fahrzeug 406 zugreifen. Der zweite Benutzer 412 kann mit dem zweiten Schlüssel 404 auf das erste Fahrzeug 406 oder das zweite Fahrzeug 408 zugreifen. Jedoch kann der zweite Benutzer 412 nicht mit dem ersten Schlüssel 402 auf eines der Fahrzeuge 406; 408 zugreifen. Auf welche Art und Weise ein solches Zugreifen erfolgt, kann durch die Zuordnung von Einstellungen E1, E2, usw. und Berechtigungen R1, R2, usw. zu jeweiligen Benutzern 410; 412 vorgegeben werden. Beispielsweise kann der erste Benutzer 410 Vater oder Mutter einer Familie mit mehreren Fahrzeugen 406 und 408 sein, und eine Berechtigung R1 zum Entriegeln von Türen, E1 zum Einstellen von Sitzen und E3 zum Einstellen von Spiegeln beider Fahrzeuge, und eine Berechtigung R2 zum Starten beider Fahrzeuge besitzen. Der zweite Benutzer 412 kann ein minderjähriges Kind derselben Familie sein, und zwar eine Berechtigung R1 zum Entriegeln der Türen beider Fahrzeuge 406 und 408 haben, jedoch keine Berechtigung R2 zum Starten eines der Fahrzeuge 406 und 408. Zudem kann das Kind lediglich mit dem zweiten Schlüssel 404, nicht aber mit dem ersten Schlüssel 402 auf die Fahrzeuge 406 oder 408 zugreifen.

Es kann dabei der Anlernvorgang zwischen Fahrzeug 406; 408 und Schlüssel 402; 404 so gestaltet werden, dass während des Vorgangs alle an den Schlüssel 402; 404 angelernten Benutzer 410; 412 im Fahrzeug 406; 408 angezeigt werden, und der Besitzer des Fahrzeugs 406; 408 den Benutzern 410; 412 dann direkt Rechte zuweisen kann, die dann vom Fahrzeug 406; 408 in das zentrale System 418 übermittelt werden. Die aktualisierte Zuordnung von Einstellungen und Rechten an verschiedene Benutzer aus dem Fahrzeug kann dabei eine ältere, im zentralen System 418 vorhandene Zuordnung ersetzen.

Bei konventionellen Lösungen kann es, im Gegensatz zu einigen Ausführungsbeispielen nicht ausreichend für einen sicheren Gebrauch sein, Rechte allein im Schlüssel zu speichern. Bei Verlust können einem Schlüssel dabei möglicherweise keine Rechte entzogen werden. Zudem kann dies ein Duplizieren oder Ersetzen des Schlüssels durch den Hersteller ermöglichen. Durch Anlernen zwischen Schlüssel und Nutzer kann es bei Ausführungsbeispielen möglich sein, die Erkennung im Schlüssel sicherer und robuster zu machen. Der Schlüssel kann so nur den Nutzer aus einer bekannten, kleinen Anzahl Personen heraus erkennen, wodurch eine Erkennung auf Basis aller im System hinterlegten Personen (beispielsweise alle Kunden eines Anbieters) gegebenenfalls entfallen kann. Durch das Anlernen zwischen Schlüssel und Nutzer kann der Schlüssel zusätzlich zu einer Funktion als verlängerter, externer Sensor des Fahrzeugs auch weitere Funktionen wahrnehmen. Das Anlernen zwischen Schlüssel und Fahrzeug kann unter Umständen die Kommunikation absichern und verhindern, dass Schlüssel kontinuierlich durch die Funkkommunikation beliebiger Fahrzeuge aufgeweckt werden. Dies kann insbesondere auftreten, wenn sich zyklische Suchen zur automatischen Annäherungserkennung für Keyless-Systeme durchsetzen.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 100: Verfahren
- 110: Empfangen
- 120: Erfassen
- 130: Empfangen
- 140: Vergleichen
- 150: Auswählen
- 160: Übertragen
- 170: Übermitteln
- 200: Kraftfahrzeugzugriffsvorrichtung
- 202: Auswerteeinrichtung
- 204: Biometrische Benutzerdaten
- 206: Übertragungseinrichtung
- 208: Auslösesignal
- 210: Vorab hinterlegte Benutzerdaten
- 212: Elektronischer Datenspeicher
- 214: Sensor
- 216: Anfragesignal
- 218: Empfänger
- 222: Zugriffsdaten
- 250: Kraftfahrzeug
- 252: Steuergerät
- 254: Kontrolleinrichtung
- 256: Empfänger
- 258: Steuersignal
- 260: Elektronischer Datenspeicher
- 262: Sensor
- 264: Sensorsignal
- 266: Sender
- 268: Fahrzeugcomputer

## Patentansprüche

1. Verfahren (100) zum Zugreifen auf wenigstens eine Fahrzeugfunktionalität wenigstens eines Kraftfahrzeugs, umfassend:
Vergleichen (140) von einen Benutzer des Kraftfahrzeugs eindeutig charakterisierenden biometrischen Benutzerdaten mit vorab hinterlegten Benutzerdaten; und
Übertragen (160) eines Auslösesignals zum Betätigen der Fahrzeugfunktionalität, basierend auf einem Vergleichsergebnis der erfassten Benutzerdaten mit den vorab hinterlegten Benutzerdaten.

2. Verfahren (100) gemäß Anspruch 1, wobei das Übertragen (160) des Auslösesignals zum Betätigen der Fahrzeugfunktionalität erfolgt, falls die erfassten Benutzerdaten mit den vorab hinterlegten Benutzerdaten übereinstimmen.

3. Verfahren (100) gemäß einem der Ansprüche 1 oder 2, ferner umfassend ein Auswählen (150) des Auslösesignals aus einer Mehrzahl von Auslösesignalen für eine Mehrzahl von Kraftfahrzeugen.

4. Verfahren (100) gemäß Anspruch 3, ferner umfassend ein Empfangen (110) eines Anfragesignals von dem Kraftfahrzeug, wobei das Auswählen (150) des Auslösesignals basierend auf dem Anfragesignal von dem Kraftfahrzeug erfolgt.

5. Verfahren (100) gemäß einem der vorangegangenen Ansprüche, ferner umfassend ein einmaliges, kontinuierliches oder periodisches Erfassen (120) der biometrischen Benutzerdaten.

6. Verfahren (100) gemäß einem der vorangegangenen Ansprüche, ferner umfassend ein Empfangen (130) der vorab hinterlegten Benutzerdaten von dem Kraftfahrzeug.

7. Verfahren (100) gemäß einem der vorangegangenen Ansprüche, wobei das Übertragen (160) des Auslösesignals ferner ein Übermitteln (170) von dem Benutzer individuell zugeordneten Zugriffsdaten zum Betätigen der Fahrzeugfunktionalität umfasst.

8. Verfahren (100) gemäß einem der vorangegangenen Ansprüche, wobei das Übertragen (170) des Auslösesignals mittels Nahfeldkommunikation erfolgt.

9. Kraftfahrzeugzugriffsvorrichtung (200) zum Zugreifen auf wenigstens eine Fahrzeugfunktionalität wenigstens eines Kraftfahrzeugs, umfassend:
eine Auswerteeinrichtung (202), welche dazu ausgebildet ist, einen Benutzer des Kraftfahrzeugs eindeutig charakterisierende biometrische Benutzerdaten (204) mit vorab hinterlegten Benutzerdaten (210) zu vergleichen; und
eine Übertragungseinrichtung (206), welche dazu ausgebildet ist, ein Auslösesignal (208) zum Betätigen der Fahrzeugfunktionalität zu übertragen, basierend auf einem Vergleichsergebnis der erfassten Benutzerdaten (204) mit den vorab hinterlegten Benutzerdaten (210).

10. Kraftfahrzeugzugriffsvorrichtung (200) gemäß Anspruch 9, welche ferner dazu ausgebildet ist, am Körper des Benutzers getragen zu werden.

11. Kraftfahrzeugzugriffsvorrichtung (200) gemäß einem der Ansprüche 9 oder 10, ferner umfassend einen elektronischen Datenspeicher (212), welcher dazu ausgebildet ist, dem Benutzer individuell zugeordnete Zugriffsdaten (222) zum Betätigen der Fahrzeugfunktionalität des Kraftfahrzeugs und/oder einer weiteren Fahrzeugfunktionalität eines weiteren Kraftfahrzeugs zu speichern.

12. Verfahren (300) für ein System mit einer Kraftfahrzeugzugriffsvorrichtung und wenigstens einem Kraftfahrzeug, umfassend:
Erfassen (310) von einen Benutzer des Kraftfahrzeugs eindeutig charakterisierenden biometrischen Benutzerdaten;
Authentisieren (320) des Benutzers basierend auf einer Kombination der biometrischen Benutzerdaten und einer eindeutigen, dem Benutzer zugeordneten Benutzerkennung durch die Kraftfahrzeugzugriffsvorrichtung;
Zugreifen (330) des Benutzers basierend auf einer Kombination der biometrischen Benutzerdaten und einer eindeutigen, der Kraftfahrzeugzugriffsvorrichtung zugeordneten Schlüsselkennung auf wenigstens eine Fahrzeugfunktionalität des wenigstens einen Kraftfahrzeugs.

13. Verfahren (300) gemäß Anspruch 12, ferner umfassend ein Anlernen der Kombination der biometrischen Benutzerdaten und der dem Benutzer zugeordneten Benutzerkennung auf der Kraftfahrzeugzugriffsvorrichtung.

14. Verfahren (300) gemäß einem der Ansprüche 12 oder 13, ferner umfassend ein Anlernen der Kombination der biometrischen Benutzerdaten und der der Kraftfahrzeugzugriffsvorrichtung zugeordneten Schlüsselkennung auf dem Kraftfahrzeug.

15. Verfahren (300) gemäß Anspruch 13 oder 14, wobei das Anlernen der Kombination vermittels Datenkommunikation zwischen einem zentralen Server und der Kraftfahrzeugzugriffsvorrichtung und/oder dem Kraftfahrzeug erfolgt.
